# EUROPÄISCHE PATENTANMELDUNG

(11) **EP 2 003 473 A1**
(43) Veröffentlichungstag der Anmeldung: **17.12.2008**
(21) Anmeldenummer: 08005530.4
(22) Anmeldetag: 25.03.2008
(51) Int. Cl.: G01V 3/12

(54) **Verfahren und System zur Detektion von Minen**

(30) Priorität: 13.06.2007 DE 102007027152
(71) Anmelder: FIRMA ING. KLAUS EBINGER, D-51149 Köln (DE)
(72) Erfinder: Ebinger, Klaus Joachim, 51143 Köln (DE)
(74) Vertreter: Heim, Hans-Karl

(57) **Zusammenfassung**

Die Erfindung betrifft ein Verfahren zur elektromagnetischen Detektion von Minen und ein Minendetektionssystem.

Um Minengebilde, insbesondere Minenfedern, detektieren zu können, verlässt man hierbei die Anwendung von PI-Pulsen und -Verfahren und geht den Weg, ein Frequenzspektrum einer insbesondere hochenergetischen Funkenstrecke für die Detektion einzusetzen.

## Beschreibung

Die Erfindung betrifft ein Verfahren zur elektromagnetischen Detektion von Minen gemäß Oberbegriff des Anspruches 1 und ein elektromagnetisches Minendetektions-system gemäß Oberbegriff des Anspruches 2.

Ein Verfahren und ein Detektionssystem dieser Art sind aus EP 0 637 760 B1 bekannt. Das bekannte Verfahren ist darauf ausgerichtet, mit Hilfe kurzer, steilflankiger Pulse Litzen, Drähte oder ähnliche Gebilde mit gewisser Antennenwirkung mittels Primärsignalen anzuregen und mittels der Auswertung der Sekundärsignale die spezifischen Gebilde erkennen zu können.

In vergleichbarer Weise ist auch aus der DE 101 39 502 C1 eine Vorrichtung und ein Verfahren bekannt, das antennenartige Gebilde wie RF-Tags von Munition zur Erkennung bringen kann.

Da das Erkennen von Minen und insbesondere neueren Minentypen immer problematischer wird und man bei der Auslegung von Minen Metallteile weitestgehend vermeidet, wird eine sichere Minendetektion immer schwieriger.
Gewisse Bauteile der Mine werden jedoch nach wie vor aus Metallen hergestellt, wie z.B. die Minenfeder, die in Verbindung mit der Zündkapsel und anderen Komponenten der Mine erforderlich ist und in diesem Zusammenhang einen LC-Kreis bildet.

Allerdings reichen zur Erkennung derartiger Minenfedern PI-Pulse nach bisheriger Erkenntnis nicht aus, um bei deren Einsatz eine objektselektive Antwort zur Erkennung der Minenfeder und des entsprechenden Minentyps zu erreichen. Die Gründe liegen vor allem darin, dass die Eigenfrequenz des induktiven Anteils eines vorausgehend angesprochenen LC-Kreises mit Minenfeder, Zündkapsel und weiteren Komponenten, zu tief ist und daher die Abklingzeit zu lange ist, um auf die Eigenfrequenz der Minenfeder abstimmen zu können.

Der Erfindung liegt daher die **Aufgabe** zugrunde, das Verfahren und das System so auszulegen, dass Minenfedern ganz spezifisch detektierbar sind und darüber auch der Minentyp bestimmbar ist.

Zur Lösung dieser Aufgabe sieht die Erfindung ein Verfahren gemäß Anspruch 1 und ein System gemäß dem Anspruch 2 vor.

Ein Kerngedanke der Erfindung kann daher darin gesehen werden, nicht mehr den Minenkörper als Ganzes, aus Metall oder Kunststoff, detektieren zu müssen, sondern die Minenkomponente, nämlich die Minenfeder zu detektieren und über diese spezifische Erkennung einer Minenfeder auch den Minentyp bestimmen zu können.

Anstelle bisher üblicherweise eingesetzter PI-Pulse wird vorgesehen, eine Funkenstrecke, insbesondere hochenergetisch, zu erregen und das dabei erzeugte Frequenzspektrum auf eine Minenfeder als eine Art antennenartiges Gebilde hoher Frequenz, z.B. über den GHz-Bereich, ankoppeln zu können.
Die Dauer einer derartigen Funkenstrecke, deren Frequenzspektrum weit in den GHz-Bereich hineingehen kann, kann etwa im µs-Bereich vorgesehen sein und der Suchaufgabe beziehungsweise einem vermuteten Minentyp angepasst werden.
Die Entladung der entsprechenden Funkenstrecke mit ihrem Frequenzspektrum ist ähnlich wie bei einem PI-Verfahren in Art einer Sprungfunktion, wobei die zu detektierende Minenfeder weit über dem Zeitbereich der Primärsignale in der Eigenfrequenz nach einer e-Funktion abklingt.

Da jede Mine über ihre eigene spezifische Minenfeder verfügt, hat diese auch eine entsprechend eigene Antwortfrequenz, die empfangsseitig selektierbar ist. Diese Auswertung der abgestrahlten Sekundärsignale wird daher normalerweise nach Abklingen der Primärsignale oder der Primärphase durchgeführt.

Der wesentliche Schritt der Erfindung ist hierbei, Minen über ihre spezifische Minenfeder als Frequenzgebilde zu detektieren, wobei hierzu hochenergetische Funkenstrecken eingesetzt werden.

Wie mit dieser Detektionsrichtung aufgezeigt, eröffnet sich auch die Möglichkeit, sofern man die Mine als dielektrischen Körper betrachtet, der im Boden eine Art Kondensator bildet und das Umfeld der Mine im Boden leitende Strompfade bewirkt, dass ein derartiger Minenbereich auch Sekundärsignale in einem detektierbaren Frequenzbereich erzeugt und derartige hochfrequente Sekundärsignale auch ohne die Spezifizierung auf Minenfedern zur Detektion der Mine genutzt werden.

Das Minendetektionssytem ist daher zweckmäßigerweise mit einer hochenergetischen Funkenstrecke ausgelegt, um über das erzeugte Frequenzspektrum eine Rückantwort in Form eines Sekundärsignales von einer entsprechenden Minenfeder zu erhalten.
Die Funkenstrecke wird hierbei über eine Dauer z.B. im µs-Bereich betrieben, wobei im empirischen Bereich, der Pulsbereich für die Funkenstrecke auch an die Suchaufgabe angepasst werden kann, also steuerbar oder regelbar im Hinblick auf die erhaltenen Sekundärsignale ist.
Die Auswertung der Sekundärsignale als Response wird üblicherweise dann geschaltet beziehungsweise getriggert, wenn die Primärsignale der Funkenstrecke weitgehend abgeklungen sind.

Aufgrund bekannter Minentypen und damit bekannter Minenfedern lässt sich über die Steuerung der Funkenstrecke ein relativ spezifisches Frequenzspektrum abstrahlen, das zu relativ gut auswertbaren Sekundärsignalen auch unbekannter Minenfedern und Minentypen führt.

## Patentansprüche

1. Verfahren zur elektromagnetischen Detektion von Minen mit schwingungsfähigen und/oder leitfähigen und/oder dielektrischen Gebilden,
bei dem elektromagnetische Schwingungen als Primärsignale in den Bereich einer zu detektierenden Mine gesendet werden, und
die von der Mine stammenden Sekundärsignale empfangen und ausgewertet werden,
**dadurch gekennzeichnet,**
a) **dass** als Primärsignale das Frequenzspektrum einer, insbesondere hochenergetischen, Funkenstrecke ausgesendet wird,
b) **dass** das Frequenzspektrum auf Minenfedern von Minen abgestimmt wird, und
c) **dass** die hoch- und niederfrequenten Sekundärsignale zur Spezifizierung der Minenfedern und Minen ausgewertet werden.

2. Elektromagnetisches Minendetektions-System mit
einer ersten Einrichtung zur Erzeugung und zum Aussenden von Primärsignalen in den zu detektierenden Bereich,
einer zweiten Einrichtung zum Empfang und zur Auswertung von Sekundärsignalen, welche als Funktion von Primärsignalen von Detektionsobjekten stammen, insbesondere zur Durchführung des Verfahrens nach Anspruch 1,
**dadurch gekennzeichnet,**
**dass** die erste Einrichtung als Funkenstrecke, insbesondere im GHz-Bereich, ausgelegt ist, und
**dass** die zweite Einrichtung auf Empfang und Auswertung von Sekundärsignalen von Minenfedern ausgelegt ist.

3. System nach Anspruch 2,
**dadurch gekennzeichnet,**
**dass** die Funkenstrecke hochenergetisch ausgelegt und beaufschlagt ist.

4. System nach Anspruch 2 oder 3,
**dadurch gekennzeichnet,**
**dass** der Pulsbetrieb der Funkenstrecke im µs-Bereich liegt und
der Suchaufgabe und/oder dem Minentyp anpassbar ist.

5. System nach einem der Ansprüche 2 bis 4,
**dadurch gekennzeichnet,**
**dass** die zweite Einrichtung nach Abklingen des Primärsignales zum Empfang und zur Auswertung der Sekundärsignale triggerbar ist.
